# EUROPEAN PATENT APPLICATION

(11) **EP 4 258 432 A1**
(43) Date of publication of application: **11.10.2023**
(21) Application number: 22215849.5
(22) Date of filing: 22.12.2022
(51) Int. Cl.: H01M 50/103, H01M 50/15, H01M 50/176, H01M 50/536, H01M 50/55, H01M 50/553, H01M 50/566

(54) **BATTERY**

(30) Priority: 06.04.2022 CN 202210357139; 22.11.2022 CN 202211478881
(71) Applicant: AESC Japan Ltd., Kanagawa, 2520012 (JP)
(72) Inventor: KONG, Xiao, Jiangyin City, Wuxi City, 214443 (CN); XU, Yonggang, Jiangyin City, Wuxi City, 214443 (CN); CAO, Xingyu, Jiangyin City, Wuxi City, 214443 (CN)
(74) Representative: Becker, Eberhard

(57) **Abstract**

A battery is provided. The battery includes a cell, including a tab (31); a casing (4), including an opening, wherein the cell is accommodated in the casing (4); a cover plate assembly (2), covering the opening; and a terminal (1), fixed onto the cover plate assembly (2) and including a terminal body (12) penetrating the cover plate assembly (2) and a base plate (11) disposed on a back surface of the cover plate assembly (2). The tab (31) is welded to the base plate (11).

## Description

### BACKGROUND

### Technical Field

The disclosure relates to the field of batteries, and in particular to a battery.

### Description of Related Art

With the rapid development of electric vehicles, there are more and more researches on batteries in the electric vehicles, and the batteries are becoming more and more extensive.

In the conventional battery, the tab is usually welded to the connecting plate, and the connecting plate is then welded to the terminal, so there are many process steps and the welding cost is high, which are not convenient for the manufacturing of the battery.

### SUMMARY

An objective of the disclosure is to provide a battery, so that the manufacturing of the battery is more convenient and the welding cost is reduced.

In order to solve the above technical issues, an embodiment of the disclosure provides a battery, which includes a cell, a casing, a cover plate assembly, and a terminal. The cell includes a tab. The casing includes an opening, and a cell is accommodated in the casing. The cover plate assembly covers the opening. The terminal is fixed onto the cover plate assembly, the terminal includes a terminal body penetrating the cover plate assembly and a base plate connected to a surface of the cover plate assembly facing an inside of the casing, and the tab is welded to the base plate.

Compared with the prior art, in the embodiment of the disclosure, the terminal includes the terminal body and the base plate, that is, the base plate is a part of the terminal, and the tab may be directly welded to the base plate, so a connecting plate is omitted. It is not necessary to weld the tab to the connecting plate, and then weld the connecting plate to the base plate, so the process steps of the connecting plate are reduced, thereby improving the convenience of the manufacturing of the battery and reducing the welding cost.

In an embodiment, a projection of an axis of the terminal body on the base plate is a point O. A straight line extending along a length direction of the cover plate assembly and passing through the point O is L, a center line along a width direction of the cover plate assembly is a third center line, a projection of an edge of the base plate on the straight line L forms a line segment MN, a point M is a point on the base plate farthest from the third center line, a point N is a point on the base plate closest to the third center line, and a ratio of a length of a line segment NO to a length of a line segment MO is 1.5 to 4.

In an embodiment, the ratio of the length of the line segment NO to the length of the line segment MO is 2 to 3.

In an embodiment, the terminal is an integrally formed member.

In an embodiment, the cell includes at least one single cell, the single cell has multiple electrode leads, and the electrode leads are overlapped and welded to form the tab.

In an embodiment, the electrode leads form the tab through ultrasonic welding, and the tab is laser welded to the base plate. The tab has an ultrasonic welding region and a laser welding region, and the laser welding region is located in the ultrasonic welding region. The cover plate assembly further includes a seal ring sleeved on the terminal body, and a projection of the laser welding region along a direction perpendicular to the cover plate assembly does not overlap with the seal ring.

In an embodiment, each of the electrode leads is stacked and welded to form the tab, and a region formed by welding is a tab welding region. The projection of the axis of the terminal body on the base plate is the point O, a projection of a center of the tab welding region on the base plate is a point Q, and the point Q is closer to the third center line of the cover plate assembly than the point O.

In an embodiment, the point O and the point Q are not collinear along the length direction of the cover plate assembly.

In an embodiment, the cell includes two single cells, and the two single cells are disposed side by side along the width direction of the cover plate assembly. Tabs with a same polarity of the two cells are welded to a same base plate.

In an embodiment, the two tabs welded to the same base plate are disposed on two sides of the point O along the width direction of the cover plate assembly.

In an embodiment, a center line of the base plate along the length direction of the cover plate assembly is a first center line, and the point O is located on the first center line. A distance from any point on a boundary of the tab welding region close to the first center line to the first center line is greater than a radius of the terminal body.

In an embodiment, a center line along the length direction of the cover plate assembly is a second center line, and the first center line coincides with the second center line. Two tab welding regions are disposed symmetrical to each other with the point O as a center of symmetry.

In an embodiment, the tab welding region is a strip-shaped tab welding region, and the strip-shaped tab welding region extends along the length direction of the cover plate assembly. A length of the tab welding region is a, and a distance between the point O and a projection point of the point Q on the third center line is greater than or equal to 0.5a.

In an embodiment, each of the electrode leads is stacked and welded to the tab to form the tab welding region. The base plate is provided with a hollow portion, and the hollow portion is disposed avoiding the tab welding region and the terminal body.

In an embodiment, the cover plate body and the base plate are both provided with electrolyte injection holes, the two electrolyte injection holes are coaxially disposed, and the electrolyte injection holes are located between the two tabs disposed on the base plate.

In an embodiment, a length of the base plate along the length direction of the cover plate assembly is 30 mm to 70 mm.

In an embodiment, the base plate is parallel to the cover plate assembly.

In an embodiment, the cell includes at least one single cell, and the single cell has a main body portion and the tab connected to the main body portion. The tab is bent and connected to the base plate, and a separation region is formed between the tab and the main body portion. The battery further includes an insulator, disposed on sides of the tab and/or the main body portion facing the separation region.

An embodiment of the disclosure also provides a manufacturing method of a battery, the manufacturing method includes the following steps. A post terminal is fixed onto a cover plate assembly of the battery, and a base plate of the post terminal is located on a back surface of the cover plate assembly. Multiple electrode leads on a cell are first overlapped and then welded, and the electrode leads form a tab of the cell after being welded. The tab is welded to the base plate.

In an embodiment, the electrode leads after being overlapped and welded form a tab welding region. The step of welding the tab to the base plate includes welding the tab to the base plate to form a post terminal welding region, and the post terminal welding region is located in the tab welding region.

In an embodiment, the tab is welded to the base plate by adopting an ultrasonic welding process.

In an embodiment, the tab is welded to the base plate by adopting a laser welding process.

In an embodiment, the post terminal includes a column and a base plate, and the cover plate assembly includes a seal ring sleeved on the column.

In the step of welding the tab to the base plate, when welding, a projection of a welding region along the direction perpendicular to the cover plate assembly does not overlap with the seal ring.

In an embodiment, the manufacturing method of the battery further includes the following steps. After welding the tab to the base plate, the tab is bent, so that the cell is perpendicular to the cover plate assembly. The cell is placed in the casing of the battery. The cover plate assembly is welded to the casing.

The beneficial effects of the disclosure include the following. Through directly welding the tab to the terminal, the weight of the cell structural member is reduced and the welding process is simplified, thereby increasing energy density, reducing costs, and improving efficiency. Further, through optimizing the size of the base plate of the terminal, the structure and the method of direct welding connection between the tab and the terminal provided by the embodiment of the disclosure may be applied to the cell whose top plate assembly has a width to length ratio of greater than 1:4.

### BRIEF DESCRIPTION OF THE DRAWINGS

One or more embodiments are exemplified through the corresponding drawings, and the exemplifications do not constitute limitation to the embodiments. Elements with the same reference numerals in the drawings represent similar elements. Unless otherwise stated, the drawings are not limited to scale.
FIG. 1 is a diagram of steps of a manufacturing of a battery according to an embodiment of the disclosure.
FIG. 2 is a structural schematic view of a battery according to an embodiment of the disclosure.
FIG. 3 is a structural schematic view after welding a tab in a cell to a base plate according to an embodiment.
FIG. 4 is an enlarged view of an area A in FIG. 3.
FIG. 5 is a structural schematic view after removing a casing of a battery according to an embodiment of the disclosure.
FIG. 6 is a top view of a cover plate assembly according to an embodiment of the disclosure.
FIG. 7 is a cross-sectional view of an area AA in FIG. 6.
FIG. 8 is an enlarged view of an area B in FIG. 7.
FIG. 9 is an exploded view of a cover plate assembly according to an embodiment of the disclosure.
FIG. 10 is a structural schematic view of a terminal according to an embodiment of the disclosure.
FIG. 11 is a top view of a cover plate assembly according to an embodiment of the disclosure.
FIG. 12 is a cross-sectional view of an area BB in FIG. 11.
FIG. 13 is an enlarged view of an area C in FIG. 12.
FIG. 14 is a structural schematic view of a base plate according to an embodiment of the disclosure.
FIG. 15 is a cross-sectional view of a battery according to an embodiment of the disclosure.

### DETAILED DESCRIPTION OF DISCLOSED EMBODIMENTS

In order for the objectives, technical solutions, and advantages of the embodiments of the disclosure to be clearer, various embodiments of the disclosure will be described in detail below in conjunction with the drawings. However, persons of ordinary skill in the art may understand that in the embodiments of the disclosure, many technical details are provided for the reader to better understand the present application. However, even without the technical details and various changes and modifications based on the following embodiments, the technical solution sought to be protected by the present application may still be implemented.

In the following description, for the purpose of explaining various disclosed embodiments, certain specific details are set forth in order to provide a thorough understanding of the various disclosed embodiments. However, persons skilled in the art will recognize that an embodiment may be practiced without one or more of the specific details. In other instances, commonly known devices, structures, and techniques associated with the present application may not be shown or described in detail in order to prevent unnecessary confusion over the description of the embodiments.

Unless the context requires otherwise, throughout the specification and the claims, the term "comprise" and variations thereof such as "contain" and "have" should be understood as having an open and inclusive meaning, that is, understood as "including, but not limited to".

Various embodiments of the disclosure will be described in detail below in conjunction with the drawings, so as to better understand the objectives, features, and advantages of the disclosure. It should be understood that the embodiments shown in the drawings are not intended to limit the scope of the disclosure, but only to illustrate the essence of the technical solutions of the disclosure.

Reference throughout the specification to "one embodiment" or "an embodiment" means that a particular feature, structure, or characteristic described in connection with the embodiment is included in at least one embodiment. Therefore, the phrase "in one embodiment" or "in an embodiment" in various places throughout the specification does not need to refer to the same embodiment. In addition, particular features, structures, or characteristics may be combined in any manner in one or more embodiments.

As used in the specification and the appended claims, the singular form "a" and "the" include plural referents unless the context clearly dictates otherwise. It should be noted that the term "or" is generally used in the sense of including "and/or" unless the context clearly dictates otherwise.

In the following description, in order to clearly show the structure and the working manner of the disclosure, many directional terms will be for description, but terms such as "front", "rear", "left", "right", "outer", "inner", "outward", "inward", "upper", and "lower" should be understood as convenient terms and should not be understood as restrictive terms.

In the traditional secondary battery that the tab is extended from the top side of a cell, an adapter piece is adopted to electrically connect a terminal and a tab, but there are many process steps, and connecting the terminal and the tab through the adapter piece also increases the welding cost. In addition, as the size of a cell increases and the distance between positive and negative terminals decreases, the width of the adapter piece also increases, thereby increasing the cost of raw materials and reducing the energy density.

The inventors of the present application conducted research on the issue, and proposed a battery structure and a manufacturing method in which a tab is directly welded to a terminal. However, during verification, it was found that when the width to length ratio of the cell is large, such as when the width to the length of the cell is greater than 1:3, according to the conventional industrial standard for the distance between positive and negative terminals and tabs, in order to weld the tab of the cell to a base plate of the terminal, the position of the tab needs to be relatively close to the position of an arc-shaped region along two ends of the length of a winding core, which easily causes the tab to be bent and curled, thus affecting the welding effect and causing the tab to be easily torn. In addition, when the tab is directly welded to a bottom part of a columnar body of the terminal, heat generated may easily melt a lower plastic on the bottom part of the columnar body of the terminal, thereby affecting the performance of the cell. The inventors further researched on the issue and found that the issue can be solved through adjusting the size of the bottom part of the terminal and the welding position to improve the welding performance.

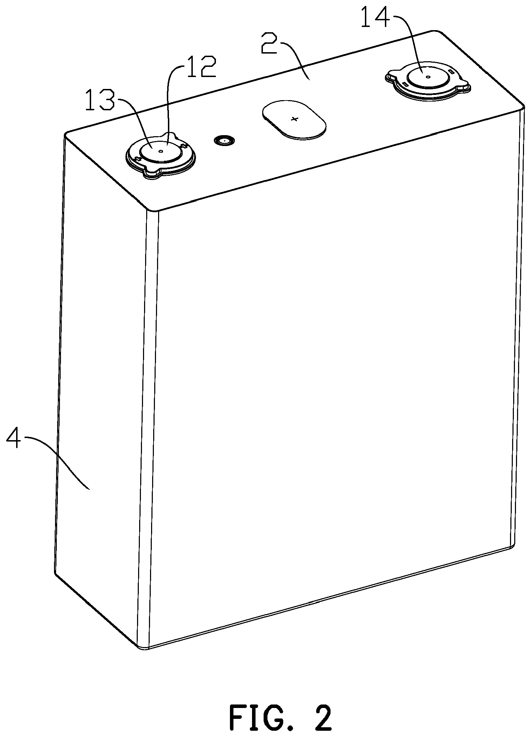

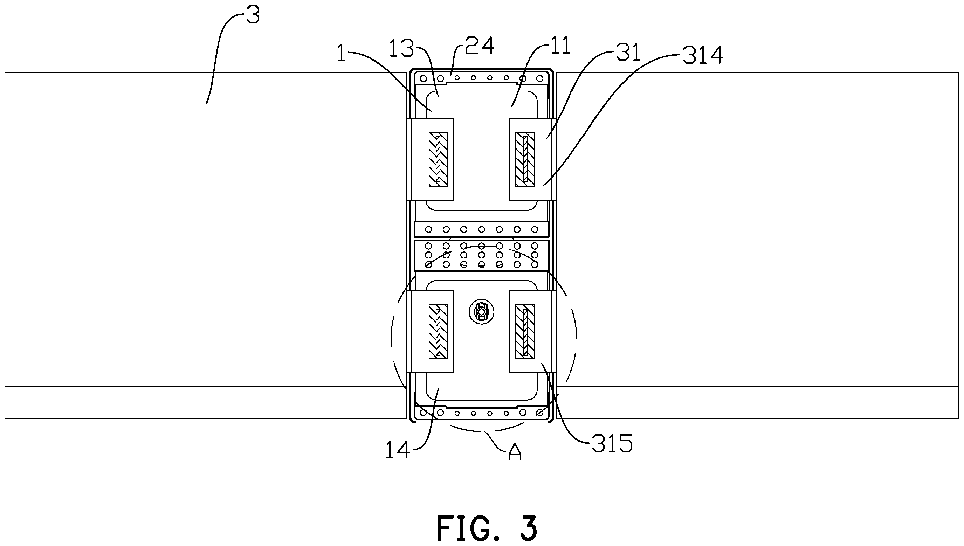

A battery according to a first embodiment of the disclosure is described below with reference to the drawings. As shown in FIG. 2 to FIG. 4, the battery includes a casing 4, a cover plate assembly 2, a terminal 1, and two single cells 3. The casing 4 has an opening, each single cell 3 is perpendicular to the cover plate assembly 2, each single cell 3 is accommodated in the casing 4, and the cover plate assembly 2 covers the opening and is fixedly connected to the casing 4. Specifically, a cover plate body 22 and the casing 4 may be connected through welding. In the embodiment, two single cells 3 form a cell, and in other embodiments, the cell may include one single cell or more single cells than in the embodiment. Each single cell 3 may also be disposed at a slight inclination in the casing with the cover plate assembly 2. The terminal 1 is fixed onto the cover plate assembly 2, the terminal 1 includes a terminal body 12 penetrating the cover plate assembly 2 and a base plate 11, the base plate 11 is located on a back surface of the cover plate assembly 2, and the tab 31 is welded to the base plate 11. It is worth mentioning that the terminal 1 is an integrally formed member, that is, the base plate 11 is a plate body formed on the bottom part of the terminal 1, and the area is larger than the terminal body 12. Since the tab 31 is directly welded to the base plate 11, a connecting plate is omitted. It is not necessary to weld the tab 31 to the connecting plate, and then weld the connecting plate to the base plate 11, so the process steps of the connecting plate are reduced, thereby improving the convenience of the manufacturing of the battery.

In addition, the single cell 3 has multiple electrode leads, the electrode leads are overlapped and welded to form the tab 31, and the tab 31 is welded to the base plate 11.

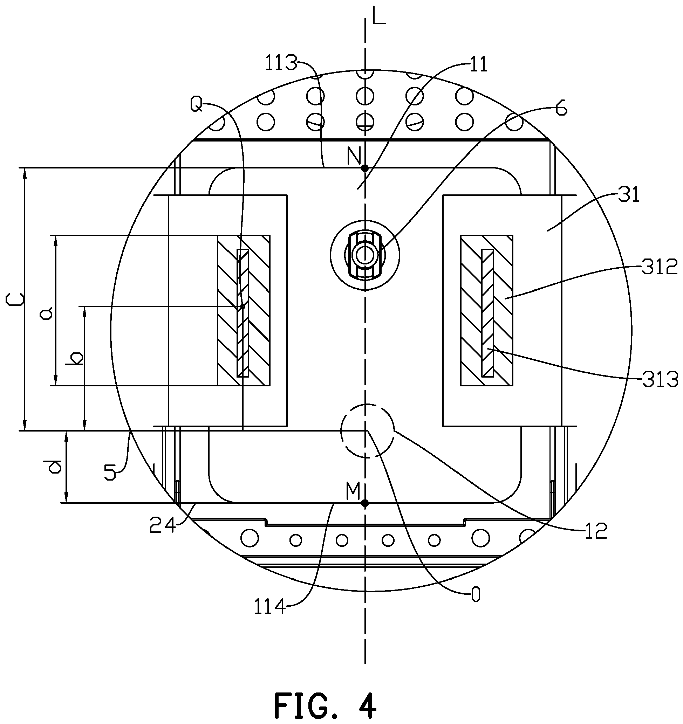

Specifically, as shown in FIG. 4, after stacking and welding the electrode leads, a tab welding region 312 is formed on the tab 31. After welding the tab 31 to the base plate 11, a terminal welding region 313 is formed on the tab 31.

Preferably, the terminal welding region 313 is located in the tab welding region 312, further preferably, a surface of the tab welding region 312 is a rough surface, and the terminal welding region is a laser welding region.

Further preferably, the tab welding region 312 is an ultrasonic welding region. Specifically, the electrode leads form the tab 31 through ultrasonic welding, and the tab 31 is laser welded to the base plate 11, that is, the tab welding region 312 is the ultrasonic welding region, and the terminal welding region 313 is the laser welding region. However, it should be noted that in some embodiments, the tab welding region 312 and the terminal welding region 313 may also be formed by adopting other welding manners, such as resistance welding.

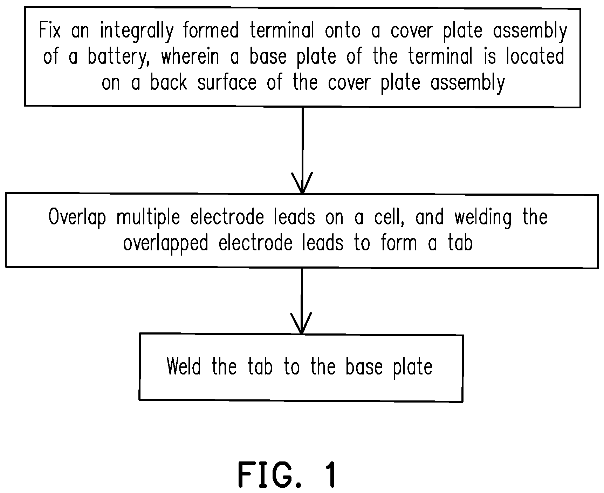

In addition, as shown in FIG. 1 to FIG. 4, the terminal 1 not only includes the base plate 11, but also includes the terminal body 12. The base plate 11 is located on the back surface of the cover plate assembly 2 and is parallel to the cover plate, the terminal 1 is disposed penetrating the cover plate assembly 2, and the base plate 11 and the terminal body 12 are an integrally formed member, preferably, the base plate 11 and the terminal body 12 are perpendicular to each other. The cover plate assembly 2 includes a seal ring 21 sleeved outside the terminal body 12 of the terminal 1. A projection of the terminal welding region 313 along a direction perpendicular to the cover plate assembly does not overlap with the seal ring 21. During the process of welding the tab 31 to the base plate 11, in order to prevent damage to the seal ring 21 sleeved outside the terminal body 12, a projection of a center of the terminal welding region 313 along a direction perpendicular to the cover plate assembly 2 is disposed far away from the seal ring 21.

Preferably, the base plate 11 extends along a length direction of the cover plate assembly 2 toward a central direction of the cover plate assembly 2.

Specifically, as shown in FIG. 4, since the connecting plate is omitted, in order to enable the tab 31 to be directly welded to the base plate 11, the area of the base plate 11 is increased, and the base plate 11 extends toward the center of the cover plate assembly 2 along the length direction of the cover plate assembly 2. As shown in FIG. 4, a position of an axis of the terminal body 12 on the base plate 11 is a point O, and an orthographic projection of a center of the tab welding region 312 on the base plate 11 is a point Q. Along the length direction of the cover plate assembly 2, the point O on the base plate 11 is located on a side of the base plate 11 far away from the center of the cover plate assembly 2, and the point Q on the base plate 11 is located on a side of the base plate 11 close to a third center line of the cover plate assembly 2. In other words, the point Q is closer to the third center line of the cover plate assembly 2 than the point O.

Further, the point O and the point Q are not collinear along the length direction of the cover plate assembly 2.

In other words, the point O is disposed as far away from the center of the cover plate assembly 2 as possible, and the point Q may be disposed close to the center of the cover plate assembly 2, which causes the point O and the point Q to be as far away as possible. The terminal welding region 313 is located in the tab welding region 312, so when the center of the tab welding region 312 is far away from the position of the terminal 1, the terminal welding region 313 can be kept as far away from the seal ring 21 as possible to prevent damage to the seal ring 21 when the tab 31 is welded to the base plate 11.

In addition, preferably, as shown in FIG. 4, the terminal welding region 313 is located in a central region of the tab welding region 312, more preferably, the center of the terminal welding region 313 coincides with the center of the tab welding region 312.

In addition, as shown in FIG. 4, the tab welding region 312 is a strip-shaped tab welding region 312, and the strip-shaped tab welding region 312 extends along the length direction of the cover plate assembly 2, that is, a length direction of the tab welding region 312 is the same as the length direction of the cover plate assembly 2. The length of the tab welding region 312 is a, and a vertical distance b between the point Q and the point O along a width direction extension line 5 of the cover plate assembly 2 is in a range of 0 to 0.5a, that is, a distance between the point O and a projection point of the point Q on the third center line is greater than or equal to 0.5a.

Preferably, the length of the tab welding region 312 is a, and the vertical distance b between the point Q and the point O along the width direction extension line 5 of the cover plate assembly 2 may be, but is not limited to, within a range of an interval formed by any two of 0.5a, 0.6a, 0.7a, 0.8a, 0.9a, and a, which causes the distance between the point O and the point Q to be as far as possible, so that when the tab 31 is welded to the base plate 11, the thermal influence caused by the high welding temperature on the seal ring 21 can be reduced or eliminated.

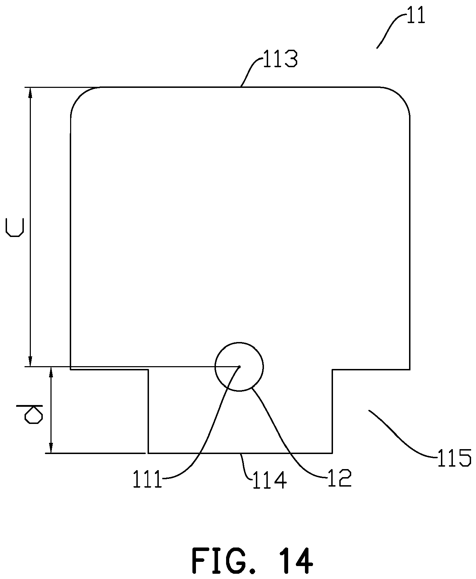

In addition, as shown in FIG. 4 and FIG. 14, since the base plate 11 extends toward a central part of the cover plate assembly 2 along the length direction of the cover plate assembly 2, the base plate 11 is enlarged, so that it is convenient to weld the tab 31 to the base plate 11. Specifically, as shown in FIG. 4 and FIG. 14, the base plate 11 includes a first side 113 and a second side 114 disposed opposite to each other, and along the length direction of the cover plate assembly 2, a ratio of a distance c between the first side 113 and the point O to a distance d between the second side 114 and the point O is any number from 1.5 to 4. In other words, a straight line extending along the length direction of the cover plate assembly 2 and penetrating the point O is L, a center line along a width direction of the cover plate assembly 2 is the third center line, a projection of an edge of the base plate on the straight line L forms a line segment MN, a point M is a point on the base plate farthest from the third center line, a point N is a point on the base plate closest to the third center line, and a ratio of the length of a line segment NO to the length of a line segment MO is 1.5 to 4. Preferably, the ratio of the length of the line segment NO to the length of the line segment MO is 2 to 3. Let the base plate 11 have enough length, so that a welding region between the tab 31 and the base plate 11 may be staggered from a region of the terminal body 12 on the base plate 11, and after placing the single cell 3 in the casing 4, the tab 31 may be directly facing the base plate, which is convenient for welding the tab 31 to the base plate 11.

Optionally, a ratio of the length between the point P and the point O to the length between the point Q and the point O is 2 to 3. Preferably, the ratio of the length between the point P and the point O to the length between the point Q and the point O is 2.5.

As shown in FIG. 4 and FIG. 14, along the length direction of the cover plate assembly 2, the length of the base plate 11 is any number from 30 to 70 mm. When a ratio of c to d is greater than 1.5 and the length of the base plate 11 is greater than 30 mm, the positions of the tab 31 and the terminal body 12 can be more conveniently staggered, so that a welding region of the terminal 1 avoids the seal ring 21 as much as possible. When the ratio of c to d exceeds 4 or the length of the base plate 11 is greater than 70 mm, the internal resistance increases due to the excessive length of the base plate 11.

In addition, as shown in FIG. 4, in the embodiment, along the width direction of the cover plate assembly 2, the point Q is located on a side of the point O close to the center of the cover plate assembly 2. Specifically, in the embodiment, as shown in FIG. 4, two single cells 3 are oppositely disposed on two sides of the cover plate assembly 2 along the width direction of the cover plate assembly 2, that is, the two single cells 3 are disposed side by side along the width direction of the cover plate assembly 2, and the tabs with the same polarity of the two single cells 3 are welded to the same base plate. At the same time, the two tabs 31 on the two single cells are oppositely disposed on two sides of the point O along the width direction of the cover plate assembly 2, that is, the point O is located at a center of the two tabs 31 of the two single cells 3. In other embodiments, the tabs with the same polarity of the two single cells 3 may also be stacked and welded together. At this time, the two tabs 31 on the two single cells 3 are not on the two sides of the point O along the width direction of the cover plate assembly 2.

In addition, preferably, as shown in FIG. 4, the point O and the two tab welding regions 312 are disposed at intervals along the width direction of the cover plate assembly 2, so that the two tab welding regions 312 may be as far away from the point O as possible. At the same time, as shown in FIG. 4, a center line of the base plate 11 along the length direction of the cover plate assembly 2 is a first center line, the point O is located on the first center line, and a distance from any point on a boundary of the tab welding region 312 close to the first center line to the first center line is greater than a radius of the terminal body 12, so that when the tab 31 is welded to the base plate 11, a welding edge is far away from the terminal body 12, so as to reduce or eliminate the thermal influence of the high welding temperature on the seal ring 21.

In addition, as shown in FIG. 4, preferably, a center line along the length direction of the cover plate assembly 2 is a second center line, the first center line coincides with the second center line, and the two tab welding regions 312 are disposed symmetrical to each other with the point O as a center of symmetry.

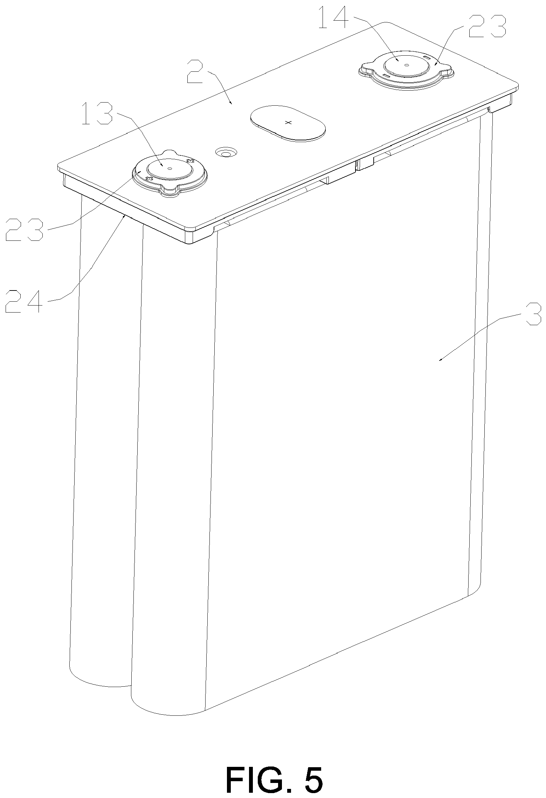

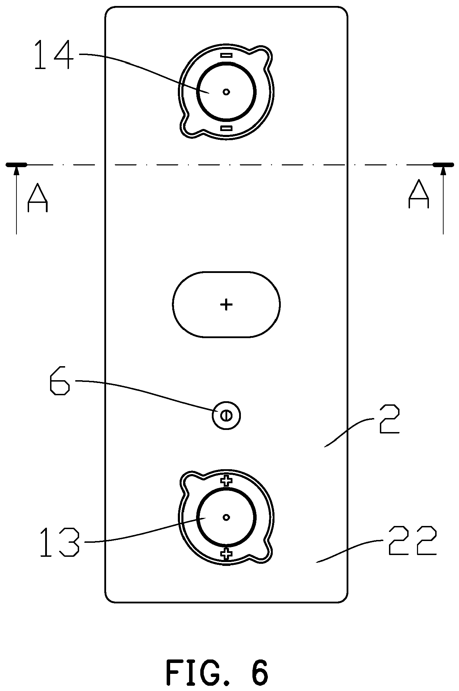

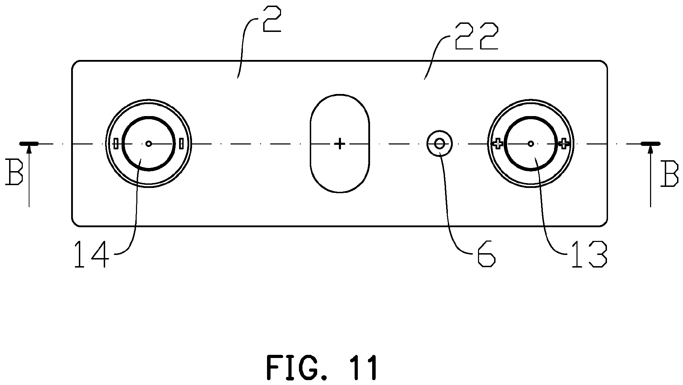

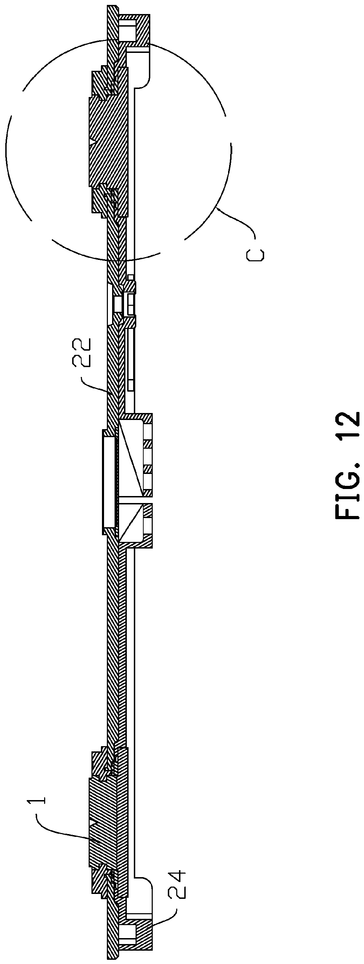

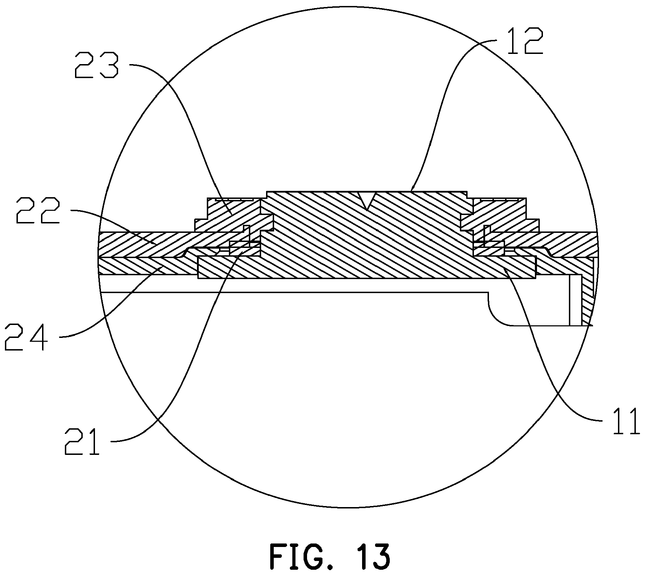

In addition, as shown in FIG. 5 to FIG. 13, the cover plate assembly 2 not only includes the seal ring 21, but also includes the cover plate body 22, an upper plastic ring 23, and a lower plastic ring 24. The cover plate body 22 is provided with an installation hole. The terminal body 12 of the terminal 1 is located in the installation hole and is disposed at an interval from a hole wall of the installation hole. The upper plastic ring 23 is fixed onto a front surface of the cover plate body 22, the upper plastic ring 23 is sleeved outside the terminal body 12, the lower plastic ring 24 is disposed on a back surface of the cover plate body 22 and is sleeved outside the terminal body 12, the base plate 11 is located on a back surface of the lower plastic ring 24. The lower plastic ring 24 is located between the base plate 11 and the cover plate body 22, and may separate the base plate 11 from the cover plate body 22. Moreover, as shown in FIG. 13, the seal ring 21 is sleeved on the terminal body 12 and can seal a gap between the terminal body 12 and the installation hole. Specifically, the upper plastic ring 23 is fixedly connected, for example, may be glued, etc. and of course may also be engaged, to the terminal body 12 and the cover plate body 22.

Of course, in some embodiments, the cover plate assembly 2 may also have other structures of the cover plate assembly 2 disclosed in the prior art, as long as the structure does not depart from the scope of the disclosure.

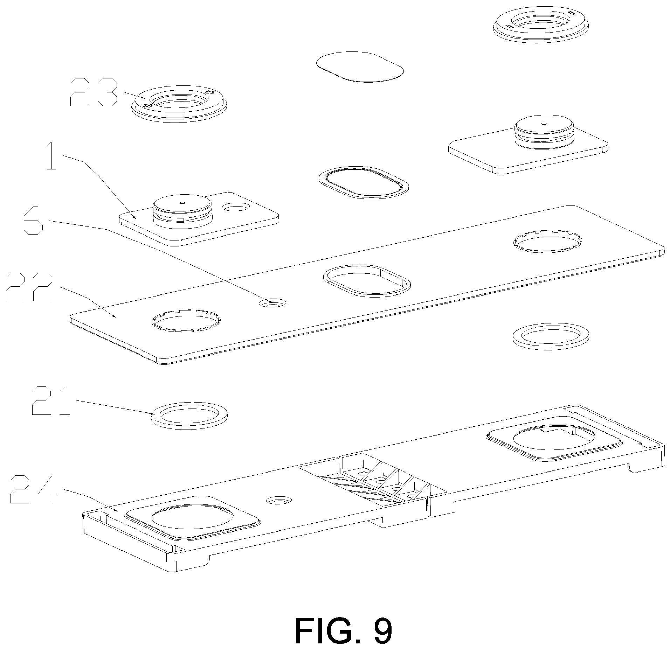

In the embodiment, as shown in FIG. 9, the cover plate body 22 is a strip-shaped cover plate. There are two terminals 1, upper plastic rings 23, seal rings 21, and lower plastic rings 24, which are oppositely disposed along the length direction of the cover plate. One of the two terminals 1 is a positive terminal 13, and the other one is a negative terminal 14. The structures of the two terminals 1 are the same, and welding regions with the tab 31 are also the same.

As shown in FIG. 9, the two single cells 3 are oppositely disposed on two sides of the cover plate body 22 along the width direction of the cover plate body 22. Each cell 3 has two tabs 31, one of the two tabs 31 is a positive tab 314, and the other tab 31 is a negative tab 315. The positive tab 314 is welded to the positive terminal 13, and the negative tab 315 is welded to the negative terminal 14. The base plates 11 of the two terminals 1 both extend toward a central direction of the cover plate body 22 along the length direction of the cover plate body 22.

In addition, as shown in FIG. 14, since the base plate 11 is enlarged, the mass of the base plate 11 also increases. In order to reduce the weight of the base plate 11 and save materials, as shown in FIG. 14, the base plate 11 is also provided with a hollow portion. The hollow portion is disposed avoiding the welding region of the terminal 1 and the terminal body 12. Specifically, in the embodiment, there are two notches 115 on the two sides of the point O. After providing the two notches 115, the weight of the base plate 11 can be effectively reduced. Of course, in some embodiments, the hollow portion may also be a through hole provided on the base plate 11, and the position of the notch 115 may also be adjusted according to requirements, as long as the position can avoid the positions of the welding region of the terminal 1 and the terminal body 12. In addition, as shown in FIG. 5, the battery also includes the casing 4. The casing 4 has an opening, each single cell 3 is perpendicular to the cover plate assembly 2, each single cell 3 is located in the casing 4, and the cover plate body 22 of the cover plate assembly 2 is covered on the opening and is fixedly connected to the casing 4. Specifically, the cover plate body 22 and the casing 4 may be connected through welding.

The manufacturing steps of the battery are as follows.

The cover plate assembly 2 is first prepared, and the terminal 1 and the cover plate assembly 2 are assembled together.

As shown in FIG. 4, the two single cells 3 are oppositely disposed on the two sides of the cover plate assembly 2 along the width direction of the cover plate body 22.

As shown in FIG. 4, the electrode leads of the single cell 3 are welded together through ultrasonic welding, the tab 31 is placed on the base plate 11, and the tab 31 is welded to the base plate 11 through laser welding. The laser welding region is within the ultrasonic welding region.

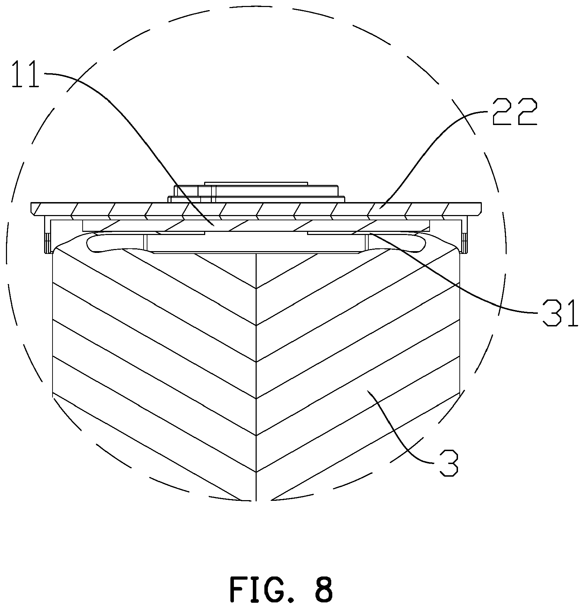

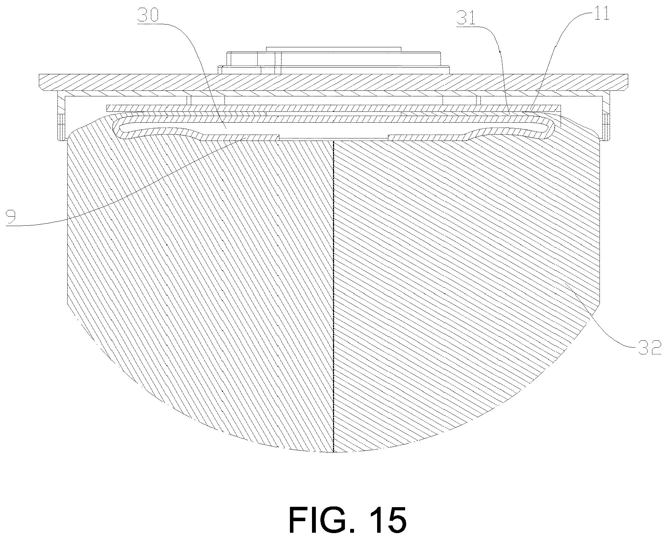

The single cell 3 is pulled, so that the tab 31 of the single cell 3 is bent, and the single cell 3 is perpendicular to the cover plate assembly 2 to form the state shown in FIG. 5 and FIG. 8. Specifically, as shown in FIG. 15, the single cell 3 includes a main body portion 32 and the tab 31, the tab 31 is bent and welded to the base plate 11, and a separation region 30 is formed between the tab 31 and the main body portion 32. The battery also includes an insulator 9. The insulator 9 is disposed in the separation region 30, the insulator 9 is attached to sides of the tab 31 and the main body portion 32 facing the separation region 30. There are two single cells. One end of the insulator 9 is on the main body portion 32 of one single cell, and the other end is on the main body portion 32 of the other single cell. The insulator 9 extends from one single cell to the other single cell. Sides of the tabs with the same polarity of the two single cells facing the separation region 30 are both attached by the insulator 9, so that the tabs 31 are separated from the main body portion 32 after being bent. The insulator 9 may be an insulating tape or foam, etc. In other embodiments, the insulator 9 may be attached to only the side of the tab facing the separation region or attached to only the side of the main body portion facing the separation region. In the embodiment, two single cells 3 are taken as an example, but in other embodiments, there may be one single cell 3 or more single cells 3.

The single cell 3 is placed in the casing 4, and the cover plate body 22 and the casing 4 are welded together to complete the preliminary manufacture of the battery.

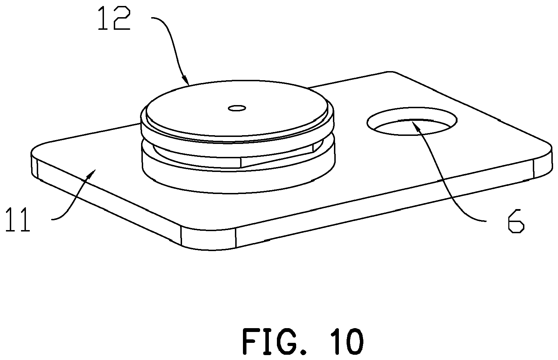

Of course, in actual situations, an electrolyte solution may also be injected into the casing 4 according to requirements. Therefore, as shown in FIG. 9 and FIG. 10, the cover plate body 22 and the base plate 11 are both provided with electrolyte injection holes 6. The two electrolyte injection holes 6 are coaxially disposed, and the electrolyte injection holes 6 are located between the two tabs 31.

A second embodiment of the disclosure relates to a manufacturing method of a battery. The manufacturing method of the battery according to the first embodiment is as shown in FIG. 1 to FIG. 4. The manufacturing method of the battery includes the following steps.

The terminal 1 is fixed onto the cover plate assembly 2 of the battery. The base plate 11 of the terminal 1 is located on the back surface of the cover plate assembly 2.

The electrode leads are overlapped on the cell, the overlapped electrode leads are welded, and the electrode leads form the tab 31 of the cell after being welded.

The tab 31 is welded to the base plate 11.

Preferably, the base plate 11 extends toward the central direction of the cover plate assembly 2 along the length direction of the cover plate assembly 2. Therefore, a larger weldable area may be provided on the base plate 11.

Since the tab 31 is directly welded to the base plate 11 after welding and forming the tab 31, the connecting plate is omitted. It is not necessary to weld the tab 31 to the connecting plate, and then weld the connecting plate to the base plate 11, so the process steps of the connecting plate are reduced, thereby improving the convenience of the manufacturing of the battery.

Preferably, after welding the overlapped electrode leads, the tab welding region 312 is formed on the tab 31.

The step of welding the tab 31 to the base plate 11 is specifically as follows. Through welding in the tab welding region 312, the tab 31 is welded to the base plate 11, and the terminal welding region 313 is formed on the tab 31 after welding.

The terminal welding region 313 is located in the tab welding region 312.

Due to the limitations of the process, if the terminal welding region 313 is not welded in the tab welding region 312, such as when welding in a region where the electrode leads are not joined together, there will be a gap between each layer of the electrode lead-out body, which causes poor welding.

It should be noted that the single cell in the embodiment is a winding cell. The winding cell is formed by stacking a positive electrode film, a separation film, and a negative electrode film. The positive electrode film, the separation film, and the negative electrode film are combined into one cell group. There are multiple core groups, and the cell groups are sequentially stacked. Each positive electrode film and each negative electrode film both have one electrode lead-out body. The electrode lead-out body of each positive electrode film is butt jointed and then welded to form the positive tab 314, and the electrode lead-out body of each negative electrode film is butt-jointed and then welded to form the negative tab 315.

In addition, in the prior art, since the adapter piece is disposed to connect to the tab 31, the base plate 11 is usually very limited. The area of the base plate 11 is basically equivalent to the area of the seal ring 21, so when the adapter piece is welded to the base plate 11, the seal ring 21 cannot be avoided during welding, which easily melts down the seal ring 21. In the embodiment, since the base plate 11 is enlarged, there are more optional welding regions on the base plate 11, so the seal ring 21 can be avoided during welding.

In addition, in the prior art, the tab 31 is welded to the adapter piece, and the adapter piece is then fixed onto a lower surface of the terminal 1 close to the cell through laser welding. Since the adapter piece is thick, the temperature of the welding region must be very high in order to penetrate the thick adapter piece for laser welding. Therefore, a sealing member sleeved outside the terminal may be easily heated and deformed, which causes sealing failure. However, in the embodiment, since the tab 31 is thin, the temperature of the welding region does not need to be too high to penetrate the tab 31 for welding, which can reduce the probability of melting down of the sealing member.

Moreover, since the adapter piece is omitted, the terminal body 12 and the base plate 11 are integrally formed, and there is no process of fixing the adapter piece onto the lower surface of the terminal 1 close to the cell through laser welding, so there is no thermal influence on the sealing member outside the terminal 1, which ensures the sealing effect of the terminal 1.

In addition, preferably, as shown in FIG. 4, the surface of the tab welding region 312 is a rough surface, and the terminal welding region 313 is the laser welding region, that is, the tab 31 is laser welded to the base plate. Since the surface of the tab welding region 312 is a rough surface, when a laser welder is adopted to irradiate the tab welding region 312, the reflectivity of laser light is low, the welding quality can be improved.

Preferably, the tab welding region 312 is the ultrasonic welding region, that is, the electrode leads are welded together through ultrasonic welding. Ultrasonic welding uses high-frequency vibration waves to transmit to two object surfaces to be welded. Under pressure, the two object surfaces are rubbed against each other to form a fusion between molecular layers. In order to increase the friction between the two objects to be welded, the surfaces of a welding head and a welding seat for ultrasonic welding are uneven. When clamping the tab from two sides for ultrasonic welding, the surface of the tab 31 after welding is an uneven surface.

Of course, in some embodiments, the electrode leads may also be laser welded together. After welding, the surface of the tab welding region 312 is embossed, so that the surface of the tab welding region 312 becomes a rough surface.

In addition, as shown in FIG. 9 to FIG. 13, the cover plate assembly 2 includes the seal ring 21 sleeved outside the terminal body 12 of the terminal 1. In the step of welding the tab 31 to the base plate 11, when welding, a projection of a center of the welding region along the direction perpendicular to the cover plate assembly 2 is far away from the seal ring 21, which can reduce damage to the seal ring 21 when the tab 31 is welded.

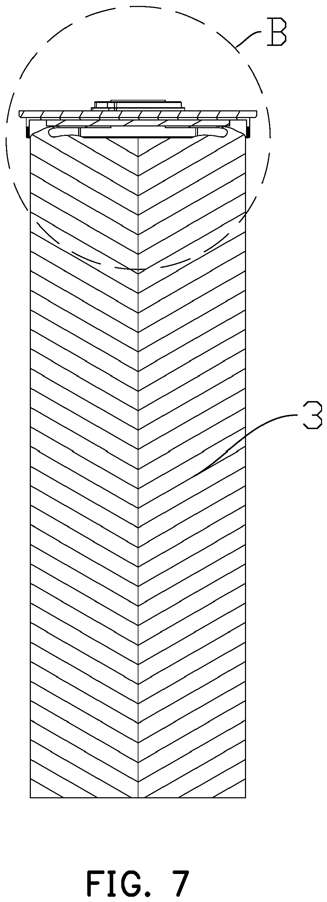

As shown in FIG. 7 to FIG. 8, the manufacturing method of the battery further includes the following steps. After welding the tab 31 to the base plate 11, the tab 31 is bent, so that the cell is perpendicular to the cover plate assembly 2, the cell is placed in the casing 4 of the battery, and the cover plate assembly 2 is welded to the casing 4.

Specifically, after welding the tab 31, the single cell 3 is pulled, so that the tab 31 is bent until the single cell 3 is perpendicular to the cover plate assembly 2, the cell is then placed in the casing 4 of the battery, and the cover plate assembly 2 is welded to the casing 4.

## Claims

1. A battery **characterized by** comprising:
a cell, comprising a tab (31);
a casing (4), comprising an opening, wherein the cell is accommodated in the casing (4);
a cover plate assembly (2), covering the opening; and
a terminal (1), fixed onto the cover plate assembly (2) and comprising a terminal body (12) penetrating the cover plate assembly (2) and a base plate (11) connected to a surface of the cover plate assembly (2) facing an inside of the casing (4), wherein the tab (31) is welded to the base plate (11).

2. The battery according to claim 1, **characterized in that** a projection of an axis of the terminal body (12) on the base plate (11) is a point O;
a straight line extending along a length direction of the cover plate assembly (2) and passing through the point O is L, a center line along a width direction of the cover plate assembly (2) is a third center line, a projection of an edge of the base plate (11) on the straight line L forms a line segment MN, a point M is a point on the base plate farthest from the third center line, a point N is a point on the base plate (11) closest to the third center line, and a ratio of a length of a line segment NO to a length of a line segment MO is 1.5 to 4.

3. The battery according to claim 2, **characterized in that** the ratio of the length of the line segment NO to the length of the line segment MO is 2 to 3.

4. The battery according to claim 2, **characterized in that** the cell comprises at least one single cell (3), the single cell (3) has a plurality of electrode leads, and the electrode leads are overlapped and welded to form the tab (31).

5. The battery according to claim 4, **characterized in that** the electrode leads form the tab (31) through ultrasonic welding, and the tab (31) is laser welded to the base plate (11);
the tab (31) has an ultrasonic welding region and a laser welding region, and the laser welding region is located in the ultrasonic welding region;
the cover plate assembly (2) further comprises a seal ring (21) sleeved on the terminal body (12), and a projection of the laser welding region along a direction perpendicular to the cover plate assembly (2) does not overlap with the seal ring (21).

6. The battery according to claim 4, **characterized in that** each of the electrode leads is stacked and welded to form the tab (31), and a region formed by welding is a tab welding region (312); the projection of the axis of the terminal body (12) on the base plate (11) is the point O, a projection of a center of the tab welding region (312) on the base plate is a point Q, and the point Q is closer to the third center line of the cover plate assembly (2) than the point O.

7. The battery according to claim 6, **characterized in that** the cell comprises two single cells (3), and the two single cells (3) are disposed side by side along the width direction of the cover plate assembly (2); and tabs (31) with a same polarity of the two single cells (3) are welded to a same base plate (11).

8. The battery according to claim 7, **characterized in that** the two tabs (31) welded to the same base plate (11) are disposed on two sides of the point O along the width direction of the cover plate assembly (2).

9. The battery according to claim 8, **characterized in that** a center line of the base plate (11) along the length direction of the cover plate assembly (2) is a first center line, and the point O is located on the first center line;
a distance from any point on a boundary of the tab welding region (312) close to the first center line to the first center line is greater than a radius of the terminal body (12).

10. The battery according to claim 6, **characterized in that** the tab welding region (312) is a strip-shaped tab welding region, and the strip-shaped tab welding region extends along the length direction of the cover plate assembly (2);
wherein a length of the tab welding region (312) is a, and a distance between the point O and a projection point of the point Q on the third center line is greater than or equal to 0.5a.

11. The battery according to claim 4, **characterized in that** each of the electrode leads is stacked and welded to the tab (31) to form a tab welding region (312); and the base plate (11) is provided with a hollow portion, and the hollow portion is disposed avoiding the tab welding region (312) and the terminal body (12).

12. The battery according to claim 1, **characterized in that** the cover plate body (22) and the base plate (11) are both provided with electrolyte injection holes (6), the two electrolyte injection holes (6) are coaxially disposed, and the electrolyte injection holes (6) are located between the two tabs (31) disposed on the base plate (11).

13. The battery according to claim 1, **characterized in that** a length of the base plate (11) along a length direction of the cover plate assembly (2) is 30 mm to 70 mm.

14. The battery according to claim 1, **characterized in that** the base plate (11) is parallel to the cover plate assembly (2).

15. The battery according to claim 1, **characterized in that** the cell comprises at least one single cell (3), and the single cell (3) has a main body portion (32) and the tab (31) connected to the main body portion (32);
the tab (31) is bent and connected to the base plate (11), and a separation region (30) is formed between the tab (31) and the main body portion (32);
the battery further comprises an insulator (9), disposed on sides of the tab (31) and/or the main body portion (32) facing the separation region (30).
